**Europäisches Patentamt**

**European Patent Office**

**Office européen des brevets**

(19)

(11) Publication number : **0 361 717 B1**

# EUROPEAN PATENT SPECIFICATION

(12)

(45) Date of publication of patent specification :
25.11.92 Bulletin 92/48

(51) Int. Cl.⁵ : **B64D 11/00**

(21) Application number : **89309147.0**

(22) Date of filing : **08.09.89**

(54) **Aircraft cabin divider.**

(30) Priority : **08.09.88 GB 8821065**

(43) Date of publication of application :
**04.04.90 Bulletin 90/14**

(45) Publication of the grant of the patent :
**25.11.92 Bulletin 92/48**

(84) Designated Contracting States :
**DE ES FR GB IT NL**

(56) References cited :
**AU-A- 523 380**
**FR-A- 2 458 461**

(73) Proprietor : **MAGERIK LTD**
**The Lodge, Station Road**
**Chinnor, Oxon OX9 4HA (GB)**

(72) Inventor : **Simpson, Leslie James**
**3 Deep Acres Chesham Bois**
**Amersham Bucks (GB)**
Inventor : **Bayliss, Brian Sydney**
**Jorbec Shiplake Bottom**
**Peppard Oxon RG9 5HP (GB)**

(74) Representative : **Allsop, John Rowland**
**European Patent Attorney, 10 London End**
**Beaconsfield, Bucks. HP9 2JH (GB)**

## Description

### FIELD OF THE INVENTION

The present invention relates to aircraft cabin dividers primarily for dividing an aircraft cabin into sections catering exclusively for first class, business class and tourist class passengers.

### BACKGROUND OF THE INVENTION

Movable cabin dividers are well known in the airline industry for separating passengers travelling on differing fare structures according to provided facilities and comfort, and are predominantly in the form of curtains attached to structural support members engaging railed tracks which run up and down the aircraft cabin.

It is well recognised that curtain dividers represent an unsightly intrusion on aircraft cabin aesthetics, and moreover do not give that appearance necessary properly to distinguish one aircraft section from the other. This latter aspect is important when consideration is given to airline profitability in terms of the need to attract passengers to the business class section of an aircraft and the increased revenue which that produces compared to that generated from economy class demand and usage.

Attempts have been made to substitute the unsightly curtain dividers with solid constructions of more appealing design provided with individual solid divider panels above each passenger seat. However the hitherto unsurmountable problem which this design produces, resides in the obstructing effect produced by the divider panels when for example the passenger in the seat to which a respective panel is attached, reclines the seat. Thus as the seat is reclined there is unavoidable head contact with the divider panel which is quite unacceptable, and moreover the divider panel interferes with the comfort of the passenger in the seat behind.

Attempts have been made to resolve one limb of this problem by shaping the divider panels such that the risk of head contact is considerably reduced, but the result of this compromise is increased interference with passenger comfort in the seat immediately behind.

Another alternative which has been tried, is the provision of solid divider panels, in which each panel is positioned sufficiently high above a respective passenger seat so as not to cause contact with the passengers head. However this idea has not proved to be effective mainly because it does not provide an efficient screen.

A further problem with solid dividers is in relation to the need to reposition them to facilitate in-flight movie viewing because of the fact that the movie video is placed at the forward end of the aircraft cabin.

This has been mainly a problem with long haul aircraft, but there is now a trend to install video movies for short haul journeys and the problem has therefore become of general concern.

### SUMMARY OF THE INVENTION

It is an object of the present invention to overcome the disadvantages of the prior art and to provide an aircraft cabin divider of appealing construction provided with divider panels for attachment to individual seats, the attitude of which in any reclinable position of the aircraft seat does not interfere with the bodily and other comforts of either the passenger in front of a respective divider panel or to the rear of it.

According to the invention there is provided an aircraft cabin divider comprising a divider frame movable between selected positions along the aircraft cabin, one or more divider panels of the divider frame, attachment means for attaching one end of the or each divider panel to the top of a reclinable aircraft seat, and extendible-retractable means attached between the other end of the or each divider panel and said divider frame, said extendible-retractable means permitting said other end of the or each divider panel to move with respect to said divider frame as the reclinable seat to which a respective one of the divider panels is attached is moved between selectable reclinable positions thereby to maintain the attitude of that divider panel at least substantially constant.

Advantageously the extendible retractable means is in the form of a pair of pivotally connected arms, the free end of one arm being attached to the divider frame, with the free end of the other arm pivotally attached to a respective divider panel, with the pivotally connected arms being urged together by means of a spring mounted between them.

Thus as the aircraft seat to which a divider panel is attached, is reclined, the pivotally connected arms separate allowing the top of the divider panel to move outwardly and downwardly against the action of the return spring in a controlled manner, and in such a way as to allow the divider panel to maintain a substantially constant attitude.

Other features and advantages of the present invention will become apparent from the following description of a preferred embodiment of the invention taken with reference to accompanying drawings.

### BRIEF DESCRIPTION OF THE DRAWINGS

Figures 1a and 1b show in aircraft cabin cross section a view of an aircraft cabin divider as installed in a narrow and wide bodied aircraft respectively; and
Figure 2 is a side view through an aircraft cabin illustrating the operation of the divider panels of the cabin divider of Figure 1; and

Figure 3 shows a perspective view in closer detail of a divider panel of the cabin divider of Figure 1.

BEST MODES OF CARRYING OUT THE INVENTION

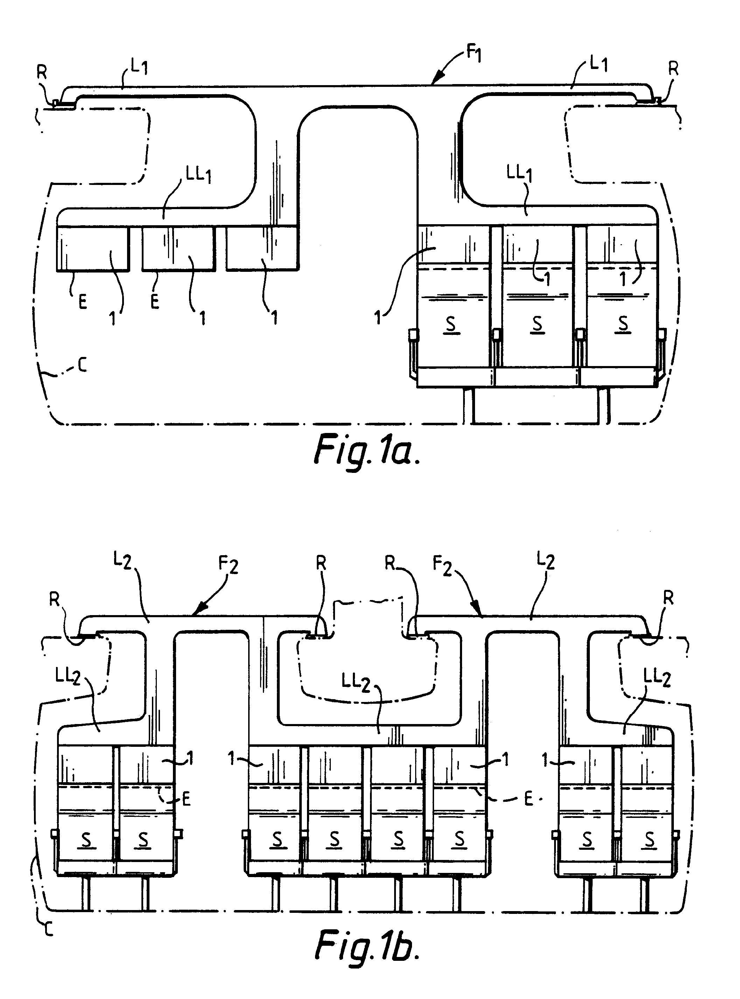

The cabin divider shown in Figures 1a and 1b of the drawings comprises a cabin divider support frame $F_1$ and $F_2$ designed for use in narrow or wide bodied aircrafts respectively.

The ends of the upper limbs $L_1$ and $L_2$ of the frames $F_1$ and $F_2$, are attached to runners R extending along the aircraft cabin C shown in outline only in Figure 1a and 1b.

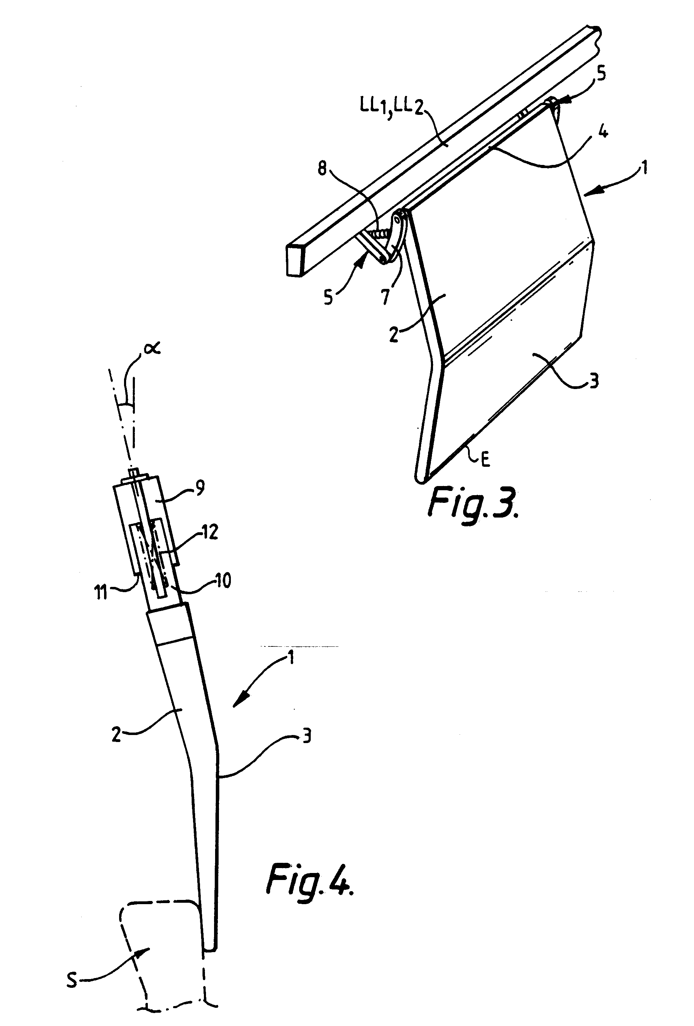

Each frame $F_1$ and $F_2$ is provided with a series of divider panels 1 which hang from the lower limbs $LL_1$ and $LL_2$ of the frames $F_1$ and $F_2$ and between those lower limbs and the top of a respective aircraft seat S. Each divider panel 1 is attachable at its lower end E to a respective reclinable seat S by means of a mechanical fastener or velcro flap (not shown), the latter fastening allowing the panels 1 to be positioned along a row of seats at any selected interval, along the length of the aircraft cabin C. Each panel 1, as seen better in Figure 3, is comprised of two portions 2 and 3 which are slightly inclined, one with respect to the other.

The top 4 of each divider panel 1 is connectable by means of two extendible-retractable devices 5 mounted respectively between the corners of the top edge of the panel 1 and the lower limbs $LL_1$, $LL_2$ of the divider frames $F_1$, $F_2$ as shown.

Each extendible-retractable device 5 comprises a pair of pivotally mounted arms 6, 7 the free end of one arm 6 of which is either permanently secured to the lower limbs $LL_1$, $LL_2$ of the divider frames $F_1$, $F_2$.

The free end of the other pivotal arm 7 is pivotally connected to a respective top corner of each panel divider 1, and the arms 6, 7 are coupled together by means of a spring 8, which in the relaxed position, holds each panel divider 1 in a maximum upright position corresponding to the maximum upright position of each aircraft seat 5.

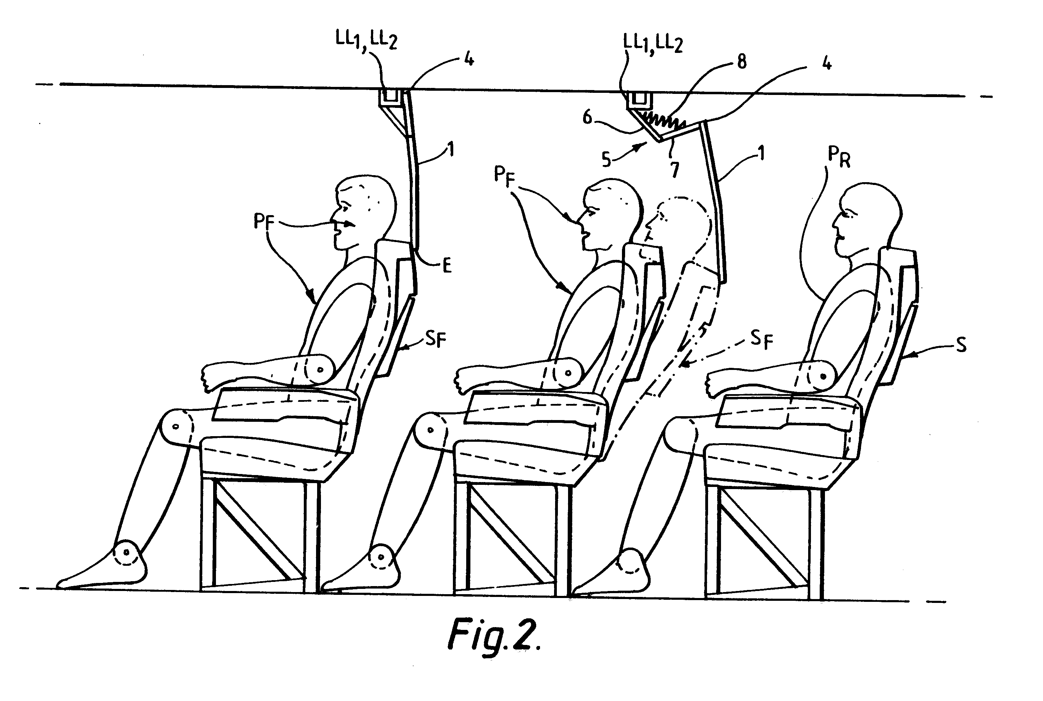

The manner in which the cabin divider of the invention operates is illustrated more particularly with reference to Figure 2.

In Figure 2 the passenger $P_F$ occupying the seat $S_F$ to which a divider panel 1 is attached, is shown sitting in the maximum upright position of the reclinable seat $S_F$, and, in dotted outline, in the maximum reclined position of the seat S.

To illustrate the effectiveness of the cabin divider according to the invention, the passenger $P_R$ immediately behind the divider panel 1 is also shown in Figure 2, and in relation to the maximum reclined position of the aircraft seat $S_F$ in front of that passenger $P_F$.

It will be apparent from Figure 2, that as the seat $S_F$ is reclined, the attitude of the divider panel 1 is maintained constant or substantially so by virtue of the fact that the top 4 of the panel is permitted to drop to a predetermined vertical height lower than that attainable when the reclinable seat $S_F$ is in the maximum upright position. It will also be apparent that by virtue of the extendible-retractable device 5, the attitude of the panel 1 remains substantially constant as the back of seat $S_F$ reclined so that neither the head of passenger $P_F$ is brought into contact with the divider panel 1, nor does the panel 1 intrude upon the space normally provided to the passenger $P_R$ seated behind the panel divider 1.

Conversely as the back of seat $S_F$ is brought upright, the device 5 retracts automatically to locate the divider panel 1 in its original position.

Each panel divider 1 may be made of opaque plastic or metal or a combination of the two materials.

It is of course frequently desirable that the aircraft cabin staff are able selectively to control visual sight through the panels 1 of the cabin dividers $F_1$, $F_2$, and to this end each panel 1 may be formed of strips of polarised film mounted respectively in slidable frames, with the strips having areas of opposite and equal polarity which can be brought into and out of respective register by means of the slidable frames.

The slidable frames may be activated remotely by the cabin crew during flight by means of, for example, electrically operated solenoids attached to the panel dividers 1.

An alternative embodiment of a mechanism for enabling the divider panels 1 to yield without substantial deviation from a constant attitude as between a movable seat back S and the divider frames $F_1$ and $F_2$, is shown in Fig 4.

As before the divider panel 1 is formed of two mutually inclined sections 2 and 3, the bottom 3 being removably attached to the seat back S, and the upper section 2 to an open channel structure 9 of the limbs $LL_1$, $LL_2$ of the frames $F_1$ or $F_2$.

The axial plane of the channel structure 9 is set at a chosen angle $\alpha$ to the vertical. An upper thinner portion 10 of the panel 1 is located for slidable movement with a certain degree of play 11 in the channel structure 9 and between positions corresponding to the maximum upright and maximum lowered positions of the seat S.

A return spring 12 is coupled between the base of a bore 13 in the thinned portion 10 and the base of the channel structure 9, and held thereto by means of a bolt and nut connection 14.

In the particular embodiment shown the angle $\alpha$, the amount of play 11, the angle between the inclined 2 and 3 of the panel 1, are all chosen in relation to the overall dimensions as between the connection 14 and the top of the seat S such that as the seat S is raised and lowered, the panel 1 as a whole, retains a basic constant position in relation to, for example a passenger sitting in the seat behind, and to the head of the passenger in the seat being reclined.

## Claims

1.  An aircraft cabin divider comprising a divider frame (F$_1$,F$_2$) movable between selected positions along the aircraft cabin (C), one or more divider panels (1) of the divider frame, attachment means for attaching one end (E) of the or each divider panel to the top of a reclinable aircraft seat (S), and extendible-retractable means (5) attached between the other end (4) of the or each divider panel and said divider frame, said extendible-retractable means permitting said other end of the or each divider panel to move with respect to said divider frame as the reclinable seat to which a respective one of the divider panels is attached is moved between selectable reclinable positions thereby to maintain the attitude of that divider panel at least substantially constant.

2.  An aircraft cabin divider as claimed in claim 1 wherein said extendible-retractable means (5) is in the form of a pair of pivotally connected arms (6,7) urged together by a spring (8), the free-end of one arm being connected to said divider frame, the free end of the other arm connected to the top of a respective divider panel.

3.  An aircraft cabin divider as claimed in claim 2 wherein said attachment means is either in the form of a velcro or press stud connection as between the respective divider panel and the top of a reclinable seat.

4.  An aircraft cabin divider as claimed in any preceeding claim wherein the panel dividers are formed of strips of polarised film mounted respectively in slidable frames, said strips having areas of opposite and equal polarity which can be moved in and out of register thereby selectively to control vision through the panel dividers.

5.  An aircraft cabin divider as claimed in claim 1 wherein said extendible-retractable means comprises an upper panel portion (2) slidable with a predetermined degree of play (11) in a channel section (9) attached to said divider frame, and a spring return (12) between the upper panel portion and the base of said channel section.

6.  An aircraft cabin divider as claimed in claim 5 wherein the axial plane of said channel section is set an angle ($\alpha$) to the vertical, the axial plane of said upper panel portion lying in or substantially in the axial plane of said channel section whereby to maintain said substantially constant attitude of the panel during raising and lowering of said reclinable seat.

## Patentansprüche

1.  Kabinenzwischenblatt bzw. -trennelement für Flugzeuge, bestehend aus einem Trennrahmen (F$_1$, F$_2$), der zwischen ausgewählten Positionen entlang der Flugzeugkabine (C) bewegbar ist, aus einen oder aus mehreren Trennelement-Panelen oder -wandelementen (1) des Trennelementrahmens, aus Mitteln zum Befestigen eines Endes (E) des oder jedes Trennelement-Panels mit der Oberseite eines verstellbaren Flugzeugsitzes (S), sowie aus ausziehbaren und einziehbaren Mitteln (5), die zwischen dem anderen Ende (4) des oder jedes Trennelement-Panels und dem erwähnten Trennelement-Rahmen vorgesehen sind, wobei die ausziehbaren und einziehbaren Mittel es ermöglichen, das erwähnte andere Ende des oder jedes Trennelement-Panels in bezug auf den erwähnten Trennelement-Rahmen zu bewegen, wenn der verstellbare Sitz, an dem eines der Trennelement-Panele befestigt ist, zwischen auswählbaren geneigten Positionen bewegt wird, um so die Stellung des Trennelement-Panels wenigstens im wesentlichen konstant zu halten.

2.  Kabinenzwischenblatt für Flugzeuge nach Anspruch 1, dadurch gekennzeichnet, daß die ausziehbaren und einziehbaren Mittel in der Form eines Paars von schwenkbar miteinander verbundenen Armen (6, 7) ausgebildet sind, die durch eine Feder (8) aufeinander vorgespannt sind, wobei das freie Ende eines Armes mit der erwähnten Trennelementrahmen und das freie Ende des anderen Armes mit der Oberseite eines betreffenden Trennelement-Panels verbunden ist.

3.  Ein Kabinenzwischenblatt für Flugzeuge nach Anspruch 2, dadurch gekennzeichnet, daß die Befestigungsmittel ein Klettverschluß oder eine Druckknopfbefestigung zwischen dem jeweiligen Trennelement-Panel und der Oberseite des verstellbaren Sitzes sind.

4.  Ein Kabinenzwischenblatt für Flugzeuge nach einem der vorhergehenden Ansprüche, wobei die Trennelement-Panele von Streifen einer polarisierten Folie gebildet sind, die jeweils in verschiebbaren Rahmen montiert sind, wobei die Streifen Bereiche entgegengesetzter und gleicher Polarität aufweisen, die in eine sich deckende Lage oder aus einer sich deckenden Lage bewegt werden können, um hierdurch selektiv die Transparenz der Trennelement-Panele zu steuern.

5.  Ein Kabinenzwischenblatt für Flugzeuge nach Anspruch 1, dadurch gekennzeichnet, daß die ausziehbaren und rückführbaren Mittel einen oberen Panel-Abschnitt (2) aufweisen, der mit einem vorgegebenen Spiel (11) in einem Kanalabschnitt (9) verschiebbar ist, welcher mit dem Trennelementrahmen verbunden ist, sowie eine Rückführfeder (12) besitzt, die zwischen dem oberen Panel-Abschnitt und der Basis bzw. dem Boden des erwähnten Kanalabschnittes wirkt.

6.  Ein Kabinenzwischenblatt für Flugzeuge nach Anspruch 5, wobei die axiale Ebene des Kanalabschnittes einen Winkel ($\alpha$) mit der Vertikalen bildet, wobei die axiale Ebene des oberen Panel-Abschnittes in oder im wesentlichen in der axialen Ebene des Kanalabschnittes liegt, um dadurch die Lage des Panels während des Anhebens und Absenkens des verstellbaren Sitzes im wesentlichen konstant zu halten.

**Revendications**

1.  Cloison pour cabine d'avion comprenant un cadre de séparation ($F_1$, $F_2$) mobile entre des positions sélectionnées le long de la cabine (C) d'un avion, un ou plusieurs panneaux de séparation (1) du cadre de séparation, des moyens de fixation pour fixer une extrémité (8) du ou de chaque panneau de séparation en haut d'un siège d'avion inclinable (S), et des moyens extensibles-rétractiles (5) fixés entre l'autre extrémité (4) du ou de chaque panneau de séparation et ledit cadre de séparation, ledit moyen extensible-rétractile permettant à ladite autre extrémité de chaque panneau de séparation de se déplacer par rapport audit cadre de séparation quand le siège inclinable auquel un panneau respectif parmi les panneaux de séparation est fixé est déplacé entre des positions inclinables au choix de façon à maintenir l'attitude du'dit panneau de séparation au moins sensiblement constante.

2.  Cloison pour cabine d'avion selon la revendication 1, dans laquelle ledit moyen extensible-rétractile prend la forme d'une paire de bras (6, 7) reliés en pivotement sollicités l'un vers l'autre par un ressort (8), l'extrémité libre d'un bras étant reliée audit cadre de séparation, l'extrémité libre de l'autre bras étant reliée à la partie supérieure du panneau de séparation correspondant.

3.  Cloison pour cabine d'avion selon la revendication 2, dans laquelle ledit moyen de fixation prend soit la forme d'une bande velcro ou la forme d'une liaison par goujon embouti par exemple entre le panneau de séparation respectif et le haut du siège inclinable.

4.  Cloison pour cabine d'avion selon l'une quelconque des revendications précédentes, dans laquelle les panneaux de séparation sont constitués de bandes de film polarisé montées respectivement sur des cadres coulissants, lesdites bandes ayant des surfaces de polarité opposée et identique qui peuvent être amenées en alignement ou en dehors de l'alignement de façon à contrôler de manière sélective la vision à travers les panneaux de séparation.

5.  Cloison pour cabine d'avion selon la revendication 1, dans laquelle ledit moyen extensible-rétractile comprend une partie supérieure de panneau (2) inclinable avec un certain jeu (11) prédéterminé dans une section (9) en forme de gouttière fixée audit cadre de séparation, et un ressort de rappel (12) entre la partie supérieure du panneau et la base de ladite section en forme de gouttière.

6.  Cloison pour cabine d'avion selon la revendication 5 dans laquelle le plan axial de ladite section de gouttière est fixé à un angle ($\alpha$) par rapport à la verticale, le plan axial de ladite partie supérieure de panneau se situant dans ou sensiblement dans le plan axial de ladite section en forme de gouttière de façon à maintenir ladite attitude sensiblement constante du panneau pendant que ledit siège inclinable est redressé et abaissé.

Fig. 1a.

Fig. 1b.

## Fig.2.

EP 0 361 717 B1

LL<sub>1</sub>,LL<sub>2</sub>

*Fig.3.*

*Fig.4.*